# DEMANDE DE BREVET EUROPEEN

(11) **EP 1 862 773 A1**
(43) Date de publication de la demande: **05.12.2007**
(21) Numéro de dépôt: 06360022.5
(22) Date de dépôt: 31.05.2006
(51) Int. Cl.: G01D 5/347

(54) **Commutateurs sans contact**

(71) Demandeur: Delphi Technologies, Inc., Troy, Michigan 48007 (US)
(72) Inventeur: Tupinier, Laurent, 67116 Reichstett (FR); Marroux, Olivier, 49000 Angers (FR)
(74) Mandataire: Littolff, Denis

(57) **Abrégé**

Commutateur comportant un organe de commande support en mouvement relatif par rapport à un dispositif fixe, l'organe et le support étant en relation de manière qu'une pluralité de positions relatives distinctes engendrent des informations différenciables produisant des effets différents.

L'un de l'organe ou du support comporte au moins une diode laser émettant un faisceau de lumière et au moins un photodétecteur, l'autre comportant au moins une zone située sur le trajet du rayon laser et équipée d'hologrammes générés par ordinateur constituant des cellules élémentaires de codage en vue d'effectuer un codage spatial de la position relative organe / support. Le faisceau envoyé par la diode laser est diffracté par les hologrammes en vue de constituer un code optique binaire lisible par le photodétecteur et directement et instantanément transformé en un code électronique binaire.

## Description

La présente invention concerne un commutateur sans contact, comportant classiquement un organe de commande en mouvement relatif par rapport à un support fixe, l'organe et le support étant en relation de manière qu'une pluralité de positions relatives distinctes engendrent des informations différenciables produisant des effets différents.

A l'heure actuelle, les commutations ou commandes s'effectuent en général par l'intermédiaire de leviers ou boutons, qui actionnent des glissières, des contacts ou encore des rouleaux. C'est par exemple le cas dans les commandes sous volant des automobiles. Il existe par conséquent toujours un lien physique entre les éléments, lien qui occasionne une certaine usure et diminue la fiabilité à long terme des dispositifs.

L'objectif de la présente invention est de remédier à ces inconvénients.

Le commutateur de l'invention propose donc une solution qui s'affranchit de tout contact physique, et se caractérise à titre principal en ce que l'un de l'organe ou du support comporte au moins une diode laser émettant un faisceau de lumière et au moins un photo détecteur, l'autre comportant au moins une zone située sur le trajet du rayon laser et équipée d'hologrammes générés par ordinateur constituant des cellules élémentaires de codage en vue d'effectuer un codage spatial de la position relative organe / support, le faisceau envoyé par la diode laser étant diffracté par les hologrammes en vue de constituer un code optique binaire lisible par le photo détecteur et directement et instantanément transformé en un code électronique binaire.

Un tel système optique de commutation, n'engendrant aucune usure et accroissant de façon conséquente la fiabilité du commutateur, résulte de l'utilisation d'un rayon lumineux associé à des hologrammes constituant en fait des cellules élémentaires de codage. A l'heure actuelle, on sait fabriquer des cellules de codage de très petite taille, de l'ordre de 30 µm à 50 µm, ce qui permet de multiplier les positions de codage même dans des commutateurs présentant un encombrement réduit. Cela étant, dans la plupart des cas, les commutateurs fonctionnent avec un nombre restreint de positions discrètes, et il n'est par conséquent pas nécessaire d'avoir recours à des cellules ayant des dimensions de cet ordre de grandeur.

La possibilité de recourir à des cellules plus grandes garantit à fortiori une bonne lecture, en s'affranchissant du même coup des problèmes liés à la poussière, aux rayures possibles, aux vibrations et autres aléas mécaniques rencontrés dans les domaines d'utilisation des commutateurs, et tout particulièrement dans l'automobile.

L'intérêt majeur de l'emploi des hologrammes réside par ailleurs dans la possibilité d'obtenir directement un code optique binaire, instantanément disponible en sortie d'un photo détecteur classique sous la forme d'un code électronique binaire, c'est-à-dire constitué de signaux électriques distincts pouvant prendre alternativement le niveau 0 et le niveau 1.

Selon l'invention, le détecteur est ensuite connecté par exemple à un microcontrôleur, qui gère l'information primaire provenant des différents signaux électroniques et la convertit en des informations secondaires permettant la mise en oeuvre des effets associés aux différentes positions du commutateur.

Certaines configurations imposent au faisceau laser de passer par des composants de guidage / orientation. Il s'agit alors simplement de compléter le circuit optique afin que le signal laser, une fois traité par le calculateur optique constitué par les hologrammes des cellules de codage, soit bien dirigé vers le photo détecteur en vue de traiter l'information.

L'emploi d'une technologie optique permet d'obtenir des configurations de commutateur sans contact de formes et d'utilisations très variées. Ainsi, selon une configuration possible, le photo détecteur et la diode laser peuvent être disposés sur une plaque fixe entourée d'un tambour rotatif en matériau guidant la lumière, dont les extrémités sont biseautées et réfléchissrnt la lumière. La diode laser et le photo détecteur sont par exemple localisés sur la plaque fixe de manière à ce que le faisceau issu de la diode soit envoyé sur le photo détecteur après deux réflexions sur les extrémités biseautées réfléchissantes, une piste annulaire d'hologrammes étant placée à l'intérieur du tambour sur le trajet du rayon laser.

Cette configuration consacre un commutateur rotatif de type bague, tel que ceux que l'on peut trouver au voisinage des extrémités des leviers sous volant.

Dans cette hypothèse, la piste annulaire peut être localisée entre la diode laser et la première réflexion.

De préférence, les hologrammes y sont combinés à un réseau de lentilles diffractives.

Selon une alternative possible, les commutateurs réalisables ont plutôt une configuration translative. Dans cette hypothèse, selon une possibilité, le commutateur de l'invention comporte une diode, un composant diviseur de lumière, un support d'hologrammes et un photo détecteur fixes, le support d'hologrammes étant constitué dans un matériau transparent à la lumière et servant de rail de guidage à un coulisseau muni d'un miroir réfléchissant la lumière, le faisceau laser étant divisé en plusieurs rayons dirigés vers le rail du coulisseau en passant par une piste d'hologrammes orientée selon l'axe du coulissement, l'un au moins desdits rayons étant réfléchi vers le photo détecteur selon la position du coulisseau.

De tels commutateurs peuvent par exemple être utilisés pour augmenter l'amplitude d'un signal, à la manière d'un potentiomètre.

Selon une possibilité, le composant diviseur de lumière peut être un réseau diviseur. Une variante possible peut se passer du composant diviseur et être alors composée d'une diode laser, d'un organe transparent à la lumière comportant un rail de coulissement guidant un coulisseau dont la face orientée vers la diode comporte une piste d'hologrammes orientée selon l'axe du coulissement, les cellules élémentaires des hologrammes effectuant alors simultanément un codage et une déflexion vers le photodétecteur.

Dans cette configuration, les hologrammes des cellules de codage peuvent par exemple être combinés à un réseau de lentilles réfractives.

L'application du même principe à un commutateur rotatif est également tout à fait possible. Dans ce cas, selon une configuration possible, le commutateur peut comporter au moins une section circulaire de type portion de volant animée d'un mouvement de rotation, sur laquelle est placée une piste d'hologrammes, la diode émettant un rayon orienté sensiblement parallèle à l'axe de rotation et étant située à l'opposé du photo détecteur par rapport à la portion de volant.

L'application la plus évidente est bien entendu celle de la mesure de la position angulaire d'une colonne de direction dans un véhicule automobile.

Selon la position relative de la diode et du photo détecteur, le système peut comporter un guide de lumière. Celui-ci, de préférence, est doté d'une lentille intégrée visant à modifier la direction du rayon laser vers le photo détecteur

L'hypothèse envisagée auparavant concerne un volant simplement mobile en rotation autour d'un axe fixe.

Il est également possible de prendre en compte une configuration à volant montée sur une liaison du type à rotule. Dans ce cas, le commutateur de l'invention est très similaire au précédent et peut également comporter au moins une portion circulaire de volant dont l'arbre central est mobile au moyen d'une liaison à rotule, la portion circulaire comportant dans cette hypothèse au moins deux pistes d'hologrammes concentriques, la diode émettant un rayon sensiblement parallèle à l'axe de rotation perpendiculaire au plan moyen du volant et étant située à l'opposé du photo détecteur par rapport au volant.

Selon encore une variante possible, la diode laser et le photo détecteur peuvent être disposés à l'intérieur de deux portions de sphères concentriques fixes comportant chacune un orifice coaxial à l'orifice de l'autre, une troisième portion de sphère, logée et guidée entre les deux autres, étant munie sur sa face interne d'hologrammes et comportant sur sa face externe un levier de commande passant au travers des orifices précités, la sphère la plus interne étant transparente à la lumière.

Dans le domaine de l'industrie automobile, de tels commutateurs peuvent par exemple être appliqués aux manettes de commande de la position de rétroviseurs.

Dans tous les cas, les hologrammes formant les cellules élémentaires de codage peuvent être réalisés sur la face d'un matériau en feuille dont l'autre face est revêtue d'un matériau adhésif.

Toutes ces solutions sans contact répondent à des nouvelles exigences exprimées par exemple par des constructeurs automobiles et tenant à la fiabilité et à la durée de vie des composants utilisés. Elles permettent également d'apporter des solutions de commutation dans des contextes où les contraintes sont très sévères.

Elles offrent enfin une grande souplesse dans la mesure où la programmation à la demande des codes détectés, au moyen des microcontrôleurs traitant les signaux détectés, autorise facilement la réalisation de modifications de fonctionnement puisque seul le programme est à changer. La base logicielle de ces commutateurs autorise en outre la multiplication du nombre des fonctions demandées.

L'invention va à présent être décrite plus en détail, en référence aux figures annexées, pour lesquelles :
- la figure 1 représente une coupe partielle longitudinale d'un commutateur de type bague ;
- la figure 2 est une section partielle de la vue de la figure 1 ;
- la figure 3 est une vue en perspective d'une configuration coulissante ;
- la figure 4 est une vue en perspective d'une configuration rotative de type volant ; et
- la figure 5 est une vue en perspective d'une configuration en portion de sphère du type joy stick.

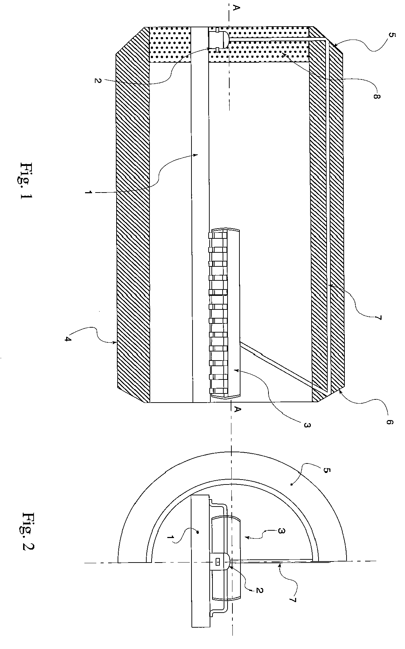

En référence à la figure 1, la partie fixe est constituée d'un support (1) de type circuit imprimé sur lequel sont disposés d'une part une diode laser (2) et d'autre part un photo détecteur (3). L'enveloppe rotative (4) comporte deux extrémités biseautées (5) et (6) réfléchissant la lumière. Le rayon laser (7) émis par les diodes (2) perpendiculairement à l'axe de rotation (A) est émis, du fait du positionnement de la diode laser (2), en direction de la surface réfléchissante (5), qui est orientée à 45° de telle sorte que ledit rayon (7) est ensuite renvoyé parallèlement à l'axe de rotation (A) en direction de l'autre surface réfléchissante (6), puis réfléchi en direction du photo détecteur (3).

Avant la réflexion sur la surface réfléchissante (5), le rayon laser traverse une zone annulaire (8) revêtue d'une piste d'hologrammes générés par ordinateur combinée à des lentilles diffractives. Le rayon laser (7) diffracté contient l'information sur la position instantanée de la bague (4) par rapport au support fixe, en l'espèce le circuit imprimé (1). Dans l'hypothèse où un tel capteur rotatif est utilisé par exemple comme bague au voisinage de l'extrémité libre d'un levier sous volant, l'ensemble constitué du circuit imprimé (1), de la diode laser (2) et du photo détecteur (3) est relié de manière fixe au corps du levier. La figure 2, montrant la géométrie circulaire de cette solution, explicite en quoi elle peut naturellement être implantée dans un levier sous volant.

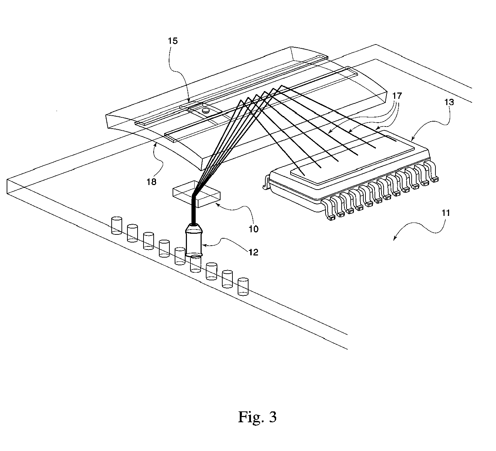

La configuration montrée en figure 3 comporte également, à titre de système fixe, un circuit imprimé (11) sur lequel sont disposés d'une part une diode laser et d'autre part un photo détecteur (13). Le signal (7) initial émis par la diode laser passe par un diviseur de lumière (10) qui scinde le faisceau laser initial (7) en une pluralité de faisceaux disposés dans un même plan. Ces faisceaux laser sont dirigés vers une piste d'hologrammes (18), c'est-à-dire une ligne de cellules de codage orientée dans la direction de l'axe d'un support (14) formant rail de guidage en coulissement pour un coulisseau (15) revêtu d'une matière réfléchissante. Ledit support (14), transparent, sert de guide de lumière et, selon la position du coulisseau (15), un à deux rayons scindés (16) sont réfléchis à l'adresse du photo détecteur (13). La position du coulisseau est par conséquent connue, puisque le rayon réfléchi contient une information sur l'hologramme qu'il a traversé.

Selon une solution coulissante alternative, le coulisseau est muni d'une piste axiale d'hologrammes qui ont chacun une fonction codeuse (code binaire) et une fonction de déflexion, ce qui permet alors de récupérer sur le photo détecteur la succession des codes inscrits sur la piste axiale en mouvement devant le photo détecteur. Le signal émis par la diode laser n'est alors pas divisé.

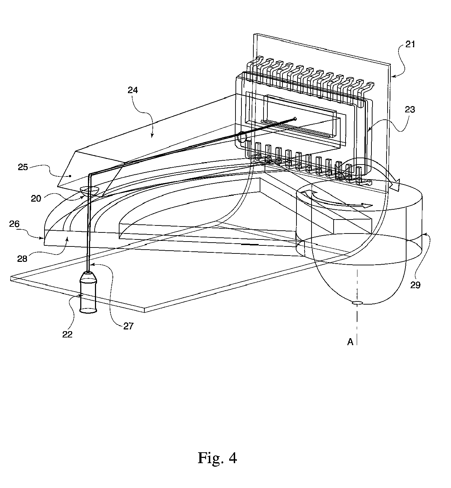

Une variante rotative de l'invention est montrée en figure 4. Dans ce cas, une portion de volant représentée par une section angulaire (26) est reliée à une colonne de direction (29) par des bras radiaux. Le volant est mobile en rotation autour d'un axe (A). Le secteur angulaire proprement dit est revêtu d'une piste circulaire (28) d'encodage, comportant en l'espèce des hologrammes sous forme de cellules de codage de la position, et il est en matériau guidant la lumière. Le rayon laser (27) issu de la diode laser (22) traverse ledit volant, est optiquement traité par passage dans la piste (28), envoyé à un guide de lumière (24) via une lentille d'intégration (20) puis, le cas échéant, réorienté dans ledit guide de lumière (24) à l'aide d'un miroir (25) correctement orienté par rapport à la position du photo détecteur (23). Les éléments fixes du type diode laser (22) et photo détecteur (23) sont, comme dans les solutions précédentes, intégrées à un même circuit imprimé (21).

L'information lue par le photo détecteur dépend évidemment de la position angulaire du volant (26), position qui est exprimée par le codage des hologrammes disposés sur la piste (28).

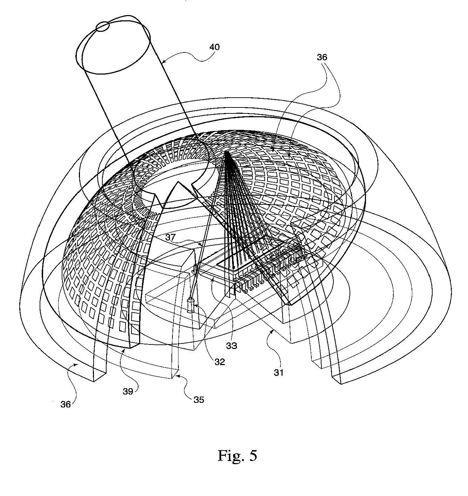

La configuration montrée en figure 5 est celle qui est par exemple utilisée par les commutateurs permettant de régler la position de rétroviseurs externes de véhicules. Cette application nécessite un grand nombre de cellules de codage car le miroir peut être réglé, dans les trois dimensions, selon un grand nombre de positions possibles. La solution tridimensionnelle à portions de sphère de la figure 5 permet la mise en oeuvre de ces nombreuses possibilités. En l'espèce, le système fixe est à nouveau composé d'un circuit imprimé (31) sur lequel sont disposés une diode (32) et un photo détecteur (33), auxquels s'ajoutent les portions de sphère (35) et (36) ouvertes à leur sommet, permettant le guidage d'une troisième portion de sphère (39) solidaire d'un levier (40), sur la face interne de laquelle sont disposées les cellules d'hologrammes générés par ordinateur (36). La sphère (35) est transparente. Le rayon laser (37) émis par la diode laser (32) est envoyé selon un angle d'incidence prédéterminé à destination de la paroi interne de la portion de sphère (39) munie des cellules de positionnement. Selon la ou les réflexions obtenues, un calcul simple réalisé par le microcontrôleur permet de déduire la position relative entre la portion de sphère (39) et le système fixe.

D'autres configurations sont bien entendu possibles, celles qui ont été expliquées en référence aux figures annexées ne pouvant être considérées comme limitatives de l'invention.

## Revendications

1. Commutateur comportant un organe de commande support en mouvement relatif par rapport à un dispositif fixe, l'organe et le support étant en relation de manière qu'une pluralité de positions relatives distinctes engendrent des informations différenciables produisant des effets différents,
**caractérisé en ce que** l'un de l'organe ou du support comporte au moins une diode laser émettant un faisceau de lumière et au moins un photodétecteur, l'autre comportant au moins une zone située sur le trajet du rayon laser et équipée d'hologrammes générés par ordinateur constituant des cellules élémentaires de codage en vue d'effectuer un codage spatial de la position relative organe / support, le faisceau envoyé par la diode laser étant diffracté par les hologrammes en vue de constituer un code optique binaire lisible par le photodétecteur et directement et instantanément transformé en un code électronique binaire.

2. Commutateur selon la revendication précédente, **caractérisé en ce que** le photodétecteur est connecté à un microcontrôleur.

3. Commutateur selon l'une quelconque des revendications précédentes, **caractérisé en ce que** le faisceau laser passe par des composants de guidage / orientation.

4. Commutateur selon l'une quelconque des revendications précédentes, **caractérisé en ce que** le photodétecteur et la diode laser sont disposés sur une plaque fixe entourée d'un tambour rotatif en matériau guidant la lumière dont les extrémités sont biseautées et réfléchissent la lumière, la diode laser et le photodétecteur étant localisés sur la plaque de manière à ce que le faisceau issu de la diode soit envoyé sur le photodétecteur après deux réflexions sur les extrémités biseautées réfléchissantes, une piste annulaire d'hologrammes étant placée à l'intérieur du tambour sur le trajet du rayon laser.

5. Commutateur selon la revendication précédente, **caractérisé en ce que** la piste annulaire d'hologrammes est localisée entre la diode laser et la première réflexion.

6. Commutateur selon l'une des revendications 4 et 5, **caractérisé en ce que** les hologrammes sont combinés à un réseau de lentilles diffractives.

7. Commutateur selon l'une quelconque des revendications 1 à 3,**caractérisé en ce qu'**il comporte une diode laser, un composant diviseur de lumière, un support d'hologrammes et un photodétecteur fixes, le support d'hologrammes étant constitué dans un matériau transparent à la lumière et servant de rail de guidage à un coulisseau muni d'un miroir réfléchissant la lumière, le faisceau laser étant divisé en plusieurs rayons dirigés vers le rail de coulisseau via une piste d'hologrammes orientée selon l'axe du coulissement, l'un au moins desdits rayons étant réfléchi vers le photodétecteur selon la position du coulisseau.

8. Commutateur selon la revendication précédente, **caractérisé en ce que** le composant diviseur de lumière est un réseau diviseur.

9. Commutateur selon l'une des revendications 1 à 3, **caractérisé en ce qu'**il comporte une diode laser, un organe transparent à la lumière comportant un rail de coulissement guidant un coulisseau dont la face orientée vers la diode comporte une piste d'hologrammes orientée selon l'axe du coulissement, les cellules élémentaires des hologrammes effectuant simultanément un codage et une déflexion vers le photodétecteur.

10. Commutateur selon l'une des revendications 7 à 9, **caractérisé en ce que** les hologrammes sont combinés à un réseau de lentilles réfractives.

11. Commutateur selon l'une quelconque des revendications 1 à 3, **caractérisé en ce qu'**il comporte au moins une portion circulaire de volant animée d'un mouvement de rotation, sur laquelle est placée une piste d'hologrammes, la diode émettant un rayon sensiblement parallèle à l'axe de rotation et étant située à l'opposé du photodétecteur par rapport au volant.

12. Commutateur selon l'une quelconque des revendications 1 à 3, **caractérisé en ce qu'**il comporte au moins une portion circulaire de volant dont l'arbre central est mobile au moyen d'une liaison à rotule, la portion circulaire comportant au moins deux pistes d'hologrammes concentriques, la diode émettant un rayon sensiblement parallèle à l'axe de rotation perpendiculaire au plan moyen du volant et étant située à l'opposé du photodétecteur par rapport au volant.

13. Commutateur selon l'une des revendications 11 et 12, **caractérisé en ce qu'**il comporte un guide de lumière.

14. Commutateur selon la revendication précédente, **caractérisé en ce que** le guide de lumière comporte une lentille intégrée visant à modifier la direction du rayon laser vers le photodétecteur.

15. Commutateur selon l'une quelconque des revendications 1 à 3, **caractérisé en ce que** la diode laser et le photodétecteur sont disposés à l'intérieur de deux portions de sphères concentriques fixes comportant chacune un orifice coaxial à l'orifice de l'autre, une troisième portion de sphère, logée et guidée entre les deux autres, étant munie sur sa face interne d'hologrammes et comportant sur sa face externe un levier de commande passant au travers desdits orifices, la sphère la plus interne étant transparente à la lumière.

16. Commutateur selon l'une quelconque des revendications précédentes, **caractérisé en ce que** les hologrammes sont réalisés sur une face d'un matériau en feuille dont l'autre face est revêtue d'un matériau adhésif.
